# EUROPEAN PATENT SPECIFICATION

(11) **EP 4 150 980 B1**
(45) Date of publication and mention of the grant of the patent: **21.10.2026**
(21) Application number: 20726767.5
(22) Date of filing: 14.05.2020
(51) Int. Cl.: H04W 64/00

(54) **METHOD FOR OBTAINING POSITIONING AND ORIENTATION OF UES WITH MULTIPLE ANTENNA PANELS FROM MINIMAL SET OF NETWORK NODES**
VERFAHREN ZUM ERHALTEN DER POSITIONIERUNG UND AUSRICHTUNG VON BENUTZERGERÄTEN MIT MEHREREN ANTENNENPANEELEN AUS EINEM MINIMALEN SATZ VON NETZWERKKNOTEN
PROCÉDÉ D'OBTENTION DE POSITIONNEMENT ET D'ORIENTATION D'UE AVEC DE MULTIPLES PANNEAUX D'ANTENNE À PARTIR D'UN ENSEMBLE MINIMAL DE NOEUDS DE RÉSEAU

(43) Date of publication of application: 22.03.2023
(73) Proprietor: Nokia Technologies Oy, 02610 Espoo (FI)
(72) Inventor: MICHALOPOULOS, Diomidis, 81541 Munich (DE); BARBU, Oana-Elena, 9000 Aalborg (DK); VEJLGAARD, Benny, 9260 Gistrup (DK); HARREBEK, Johannes, 9000 Aalborg (DK)
(74) Representative: Mudge, Kevin
(86) International application number: PCT/EP2020/063516
(87) International publication number: WO 2021/228400

(56) References cited:
- WO-A1-2020/024597
- KR-A- 20100 026 519
- US-A1- 2019 075 538
- US-A1- 2019 219 665
- US-A1- 2020 142 025

## Description

### TECHNICAL FIELD

The present application generally relates to information technology. In particular, some example embodiments of the present application relate to positioning user equipment (UE) together with an orientation or heading of the UE with a minimal number of network nodes involved in the positioning process.

### BACKGROUND

Positioning is one of the key enablers for 5G both in industrial and non-industrial use cases. The industrial use cases refer to, for example, applications involving autonomous operations between mobile industrial UEs, such as operations with so-called automated guided vehicles (AGVs). The non-industrial uses cases may refer to, for example, applications involving mobile UEs in urban environments such as trains, buses or drones. Although there are GNSS (global navigation satellite system) solutions for deriving the location of UEs in outdoor setups, this is not possible in indoor environments (such as factory halls or tunnels) due to the absence of satellite connectivity. Furthermore, positioning for industrial applications is a relatively new topic in 3GPP, since existing positioning solutions (i.e., in LTE and legacy systems) concern mainly emergency 911 services where the accuracy requirements are much coarser than in industrial and traffic applications. Hence, existing standards may not encompass accurate indoor positioning solutions. US 2019/075538 A1 discloses so-called "Collaborative time-of-arrival", wherein time-of-arrival measures are shared between wireless nodes to estimate position.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

The invention is provided in the independent claims. Further implementation forms are provided in the dependent claims.

According to a first aspect, an apparatus is configured to transmit, from a primary antenna of a user node, an uplink reference signal for positioning to at least one network node; receive a downlink reference signal for positioning from the at least one network node in response to the uplink reference signal, wherein the downlink reference signal is received at the primary antenna and at least one secondary antenna associated with the user node; obtain, by the user node, a time of arrival measurement of the at least one downlink reference signal for positioning at the primary antenna; obtain, by the user node, a time of arrival measurement of the at least one downlink reference signal for positioning at the at least one secondary antenna; compute, by the user node, one or more time difference of arrival measurements based on the difference of the time of arrival measurements of the downlink reference signal received from the same network node at the primary antenna and the at least one secondary antenna; compute, by the user node, one or more mixed round-trip time measurements based on the time of transmission of the uplink reference signal from the primary antenna and the time of reception of the at least one downlink reference signal at the at least one secondary antenna; obtain, by the user node, a distance between the primary antenna and the at least one secondary antenna; and determine, by the user node, a measurement report comprising the one or more mixed round-trip time measurements, the one or more time difference of arrival measurements and the distance between the primary antenna and the at least one secondary antenna.

According to a second aspect, a method comprises transmitting, from a primary antenna of a user node, an uplink reference signal for positioning to at least one network node; receiving a downlink reference signal for positioning from the at least one network node in response to the uplink reference signal, wherein the downlink reference signal is received at the primary antenna and at least one secondary antenna associated with the user node; obtaining, by the user node, a time of arrival measurement of the downlink reference signal for positioning at the primary antenna; obtaining, by the user node, a time of arrival measurement of the at least one downlink reference signal for positioning at the at least one secondary antenna; computing, by the user node, one or more time difference of arrival measurements based on the difference of the time of arrival measurements of the downlink reference signal received from the same network node at the primary antenna and the at least one secondary antenna; computing, by the user node, one or more mixed round-trip time measurement based on the time of transmission of the uplink reference signal from the primary antenna and the time of reception of the at least one downlink reference signal at the at least one secondary antenna; obtaining, by the user node, a distance between the primary antenna and the at least one secondary antenna; and determining, by the user node, a measurement report comprising the one or more mixed round-trip measurements, the one or more time difference of arrival measurements and the distance between the primary antenna and the at least one secondary antenna.

According to a third aspect, a computer program is configured, when executed by a processor, to cause an apparatus at least to: transmit, from a primary antenna of a user node, an uplink reference signal for positioning to at least one network node; receive a downlink reference signal for positioning from the at least one network node in response to the uplink reference signal, wherein the downlink reference signal is received at the primary antenna and at least one secondary antenna associated with the user node; obtain, by the user node, a time of arrival measurement of the at least one downlink reference signal for positioning at the primary antenna; obtain, by the user node, a time of arrival measurement of the at least one downlink reference signal for positioning at the at least one secondary antenna; compute, by the user node, one or more time difference of arrival measurements based on the difference of the time of arrival measurements of the downlink reference signal received from the same network node at the primary antenna and the at least one secondary antenna; compute, by the user node, one or more mixed round-trip time measurements based on the time of transmission of the uplink reference signal from the primary antenna and the time of reception of the at least one downlink reference signal at the at least one secondary antenna; obtain, by the user node, a distance between the primary antenna and the at least one secondary antenna; and determine, by the user node, a measurement report comprising the one or more mixed round-trip time measurements, the one or more time difference of arrival measurements and the distance between the primary antenna and the at least one secondary antenna.

According to a fourth aspect, an apparatus comprises means for transmitting, from a primary antenna of a user node, an uplink reference signal for positioning to at least one network node; receiving a downlink reference signal for positioning from the at least one network node in response to the uplink reference signal, wherein the downlink reference signal is received at the primary antenna and at least one secondary antenna associated with the user node; obtaining, by the user node, a time of arrival measurement of the downlink reference signal for positioning at the primary antenna; obtaining, by the user node, a time of arrival measurement of the at least one downlink reference signal for positioning at the at least one secondary antenna; computing, by the user node, one or more time difference of arrival measurements based on the difference of the time of arrival measurements of the downlink reference signal received from the same network node at the primary antenna and the at least one secondary antenna; computing, by the user node, one or more mixed round-trip time measurement based on the time of transmission of the uplink reference signal from the primary antenna and the time of reception of the at least one downlink reference signal at the at least one secondary antenna; obtaining, by the user node, a distance between the primary antenna and the at least one secondary antenna; and determining, by the user node, a measurement report comprising the one or more mixed round-trip measurements, the one or more time difference of arrival measurements and the distance between the primary antenna and the at least one secondary antenna.

According to a fifth aspect, an apparatus is configured to receive, by a secondary user node, a configuration message comprising clock synchronization between a user node and the secondary user node and a request to report time of arrival information of a downlink reference signal for positioning to the user node; receive at least one downlink reference signal for positioning at a secondary antenna of the secondary user node; compute, by the secondary user node, a time of arrival measurement of the at least one downlink reference signal for positioning; and transmit, by the secondary user node, the time of arrival measurement to the user node.

According to a sixth aspect, a method comprises receiving, by a secondary user node, a configuration message comprising clock synchronization between a user node and the secondary user node and a request to report time of arrival information of a downlink reference signal for positioning to the user node; receiving at least one downlink reference signal for positioning at a secondary antenna of the secondary user node; computing, by the secondary user node, a time of arrival measurement of the at least one downlink reference signal for positioning; and transmitting, by the secondary user node, the time of arrival measurement to the user node.

According to a seventh aspect, a computer program is configured, when executed by a processor, to cause an apparatus at least to: receive, by a secondary user node, a configuration message comprising clock synchronization between a user node and the secondary user node and a request to report time of arrival information of a downlink reference signal for positioning to the user node; receive at least one downlink reference signal for positioning at a secondary antenna of the secondary user node; compute, by the secondary user node, a time of arrival measurement of the at least one downlink reference signal for positioning; and transmit, by the secondary user node, the time of arrival measurement to the user node.

According to an eighth aspect, an apparatus comprises means for receiving, by a secondary user node, a configuration message comprising clock synchronization between a user node and the secondary user node and a request to report time of arrival information of a downlink reference signal for positioning to the user node; receiving at least one downlink reference signal for positioning at a secondary antenna of the secondary user node; computing, by the secondary user node, a time of arrival measurement of the at least one downlink reference signal for positioning; and transmitting, by the secondary user node, the time of arrival measurement to the user node.

According to a ninth aspect, an apparatus is configured to receive, by a location management function, a measurement report comprising a mixed round-trip time measurement, a time difference measurement and a distance between a primary antenna and at least one secondary antenna from a user node, wherein the mixed round-trip measurement is based on the difference of a time of transmission of an uplink reference signal from the primary antenna to at least one network node and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna; receive, by the location management function, a report comprising a time difference measurement associated with reception of the uplink reference signal for positioning and transmission of the downlink reference signal for positioning from the at least one network node; compute distances of the primary antenna and the at least one secondary antenna from the at least one network node based on the mixed round-trip time measurement and the time difference measurements received from the at least one network node and the user node; compute locations of the primary antenna and the at least one secondary antenna with respect to the at least one network node based on the distances of the primary and the at least one secondary antenna from the at least one network node and the distances between the primary antenna and the at least one secondary antenna; and determine a position and orientation or heading of the user node and associated antennas based on the distances of the primary and the at least one secondary antenna from the at least one network node and the locations of the primary antenna and the at least one secondary antenna with respect to the at least one network node.

According to a tenth aspect, a method comprises receiving, by a location management function, a measurement report comprising at least one mixed round-trip time measurement, at least one time difference measurement and a distance between a primary antenna and at least one secondary antenna from a user node, wherein the mixed round-trip measurement is based on the difference on a time of transmission of an uplink reference signal to at least one network node from the primary antenna and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna; receiving, by the location management function, a report comprising a time difference measurement associated with reception of the uplink reference signal for positioning and transmission of the downlink reference signal for positioning from the at least one network node; computing distances of the primary antenna and the at least one secondary antenna from the at least one network node based on the mixed round-trip time measurement and the time difference measurements received from the at least one network node and the user node; computing locations of the primary antenna and the at least one secondary antenna with respect to the at least one network node based on the distance of the primary and the at least one secondary antenna from the at least one network node and the distances between the primary antenna and the at least one secondary antenna; and determining a position and orientation or heading of the user node and associated antennas based on the distances of the primary and the at least one secondary antenna from the at least one network node and the locations of the primary antenna and the at least one secondary antenna with respect to the at least one network node.

According to an eleventh aspect, a computer program is configured, when executed by a processor, to cause an apparatus at least to: receive, by a location management function, a measurement report comprising a mixed round-trip time measurement, a time difference measurement and a distance between a primary antenna and at least one secondary antenna from a user node, wherein the mixed round-trip measurement is based on the difference of a time of transmission of an uplink reference signal from the primary antenna to at least one network node and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna; receive, by the location management function, a report comprising a time difference measurement associated with reception of the uplink reference signal for positioning and transmission of the downlink reference signal for positioning from the at least one network node; compute distances of the primary antenna and the at least one secondary antenna from the at least one network node based on the mixed round-trip time measurement and the time difference measurements received from the at least one network node and the user node; compute locations of the primary antenna and the at least one secondary antenna with respect to the at least one network node based on the distances of the primary and the at least one secondary antenna from the at least one network node and the distances between the primary antenna and the at least one secondary antenna; and determine a position and orientation or heading of the user node and associated antennas based on the distances of the primary and the at least one secondary antenna from the at least one network node and the locations of the primary antenna and the at least one secondary antenna with respect to the at least one network node.

According to a twelfth aspect, an apparatus comprises means for receiving, by a location management function, a measurement report comprising at least one mixed round-trip time measurement, at least one time difference measurement and a distance between a primary antenna and at least one secondary antenna from a user node, wherein the mixed round-trip measurement is based on the difference on a time of transmission of an uplink reference signal to at least one network node from the primary antenna and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna; receiving, by the location management function, a report comprising a time difference measurement associated with reception of the uplink reference signal for positioning and transmission of the downlink reference signal for positioning from the at least one network node; computing distances of the primary antenna and the at least one secondary antenna from the at least one network node based on the mixed round-trip time measurement and the time difference measurements received from the at least one network node and the user node; computing locations of the primary antenna and the at least one secondary antenna with respect to the at least one network node based on the distances of the primary and the at least one secondary antenna from the at least one network node and the distance between the primary antenna and the at least one secondary antenna; and determining a position and orientation or heading of the user node and associated antennas based on the distances of the primary and the at least one secondary antenna from the at least one network node and the locations of the primary antenna and the at least one secondary antenna with respect to the at least one network node.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to explain the example embodiments. In the drawings:
FIG. 1 illustrates an example of an apparatus configured to practice one or more example embodiments;
FIG. 2 illustrates an example of obtaining a position and orientation of an industrial user equipment with a minimal number of network nodes according to an example embodiment;
FIG. 3 illustrates an example of mixing signaling with a network and a UE carrying two antennas at a fixed distance from each other according to an example embodiment;
FIG. 4 illustrates an example of obtaining a set of valid candidate locations for antenna panels according to an example embodiment;
FIG. 5 illustrates an example of a message sequence chart for obtaining a location and an orientation of a UE with two antenna panels according to an example embodiment;
FIG. 6 illustrates an example of a message sequence chart for obtaining a location and an orientation of a device comprising two UEs according to an example embodiment;
FIG. 7 illustrates a method for determining measurements for positioning of an apparatus according to an example embodiment;
FIG. 8 illustrates a method for assisting in determining measurements for positioning of an apparatus according to an example embodiment;
FIG. 9 illustrates a method for determining positioning of an apparatus according to an example embodiment;
Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of operations for constructing and operating the example. However, the same or equivalent functions and sequences may be accomplished by different examples.

One possibility for providing accurate positioning indoors may comprise radio access technology (RAT)-dependent solutions associated with NR (new radio) technology. In addition, the RAT-dependent solutions may provide candidate approaches for outdoor setups as well, especially when high integrity of outdoor positioning is required. For instance, GNSS approaches by themselves do not always guarantee sufficient integrity, for example, in highly urban scenarios or tunnels.

Localization of a UE may be performed using a multi round-trip time (multi-RTT) method. In the method, an LMF (location management function) may send a PRS (positioning reference signal) to the UE, wherein the LMF indicates to the UE a DL (downlink) PRS configuration associated with different network nodes. The LMF, or another network entity such as gNB, may also indicate to the UE the UL (uplink) PRS information, on which the UE transmits the UL PRS for the network nodes to measure. Then, the network nodes transmit DL PRS and UEs transmit UL PRS to each other. In response, the UEs and network nodes measure TOA (time of arrival). The UE may transmit a measurement report to the LMF, including the measured UE Rx-Tx (reception-transmission) time difference for each network node. The network node transmits a measurement report to the LMF, including the network node's Rx-Tx time difference measurement. The LMF may perform a subtraction of the measurements to obtain the RTT per each network node, with which it may compute the location of the UE.

However, LTE or even NR Rel.15 and Rel.16 standards may not provide solutions for obtaining an orientation of UEs, together with their position. In addition, usually the positioning solutions, such as using the multi-RTT method, may require at least three gNBs involved in the positioning process. The lack of positioning and orientation solutions is more visible in industrial scenarios involving relatively large sized UEs.

An example embodiment provides a novel positioning technique suitable for both indoor and outdoor positioning. In an embodiment, multiple antenna panels at a UE may be leveraged for fusing an extended set of available information to a location management function such that the position and orientation or heading of the UE is obtained with minimum number of network nodes involved. An example embodiment concerns mixing the signaling between network and the UE, such that the antenna or antenna panel receiving a signal from the network is different to the antenna or antenna panel transmitting to the network. The example embodiments may provide accurate positioning also in industrial environments or in dense deployment environments with large-sized mobile equipment, which may be carrying one or more antennas or antenna panels. In an embodiment, the tracked mobile equipment may be carrying a plurality of UEs with single antennas or antenna panels for implementation of the mixed signaling. With the mixed signaling, instead of setting up independent signaling for each antenna, minimal information exchange between the network and the UE may be achieved for deriving the position and orientation or heading of the UE.

According to an example embodiment, a UE carrying at least two antennas, antenna panels or antenna arrays may be configured to use different antennas for reception and transmission of reference signals for positioning. The UE may report at least one round-trip measurement, time difference of arrival measurement and a distance between the at least two antennas to an LMF. The round-trip time measurements and the time difference measurements are associated with the different antennas. The LMF may determine orientation of the UE based on the content of the report in addition to the position of the UE. In an embodiment, at least one network node, preferably two network nodes, may be involved in the positioning process. In an example embodiment, the at least two antennas are located at different UEs instead of the locating at the same UE, wherein one of the UEs is a primary UE configured to compute and report the corresponding measurements to the LMF. The primary UE may configure one or more secondary UEs device for device-to-device reporting to obtain the information relating to the reception of signals at the secondary UE. Hence, the round-trip measurements and the time difference of arrival measurements may be implemented as intra-node and inter-antenna measurements of the two or more antennas of a single UE, or as inter-node measurements of two or more coupled UEs with single antennas.

Advantages of the example embodiments may comprise obtaining the positioning together with orientation or heading of the tracked device, minimal number of involved network nodes, use of less L1 resources from multiple network nodes, and minimal latency signaling involved. Accurate positioning indoors, as well as outdoors, and high integrity positioning may be provided.

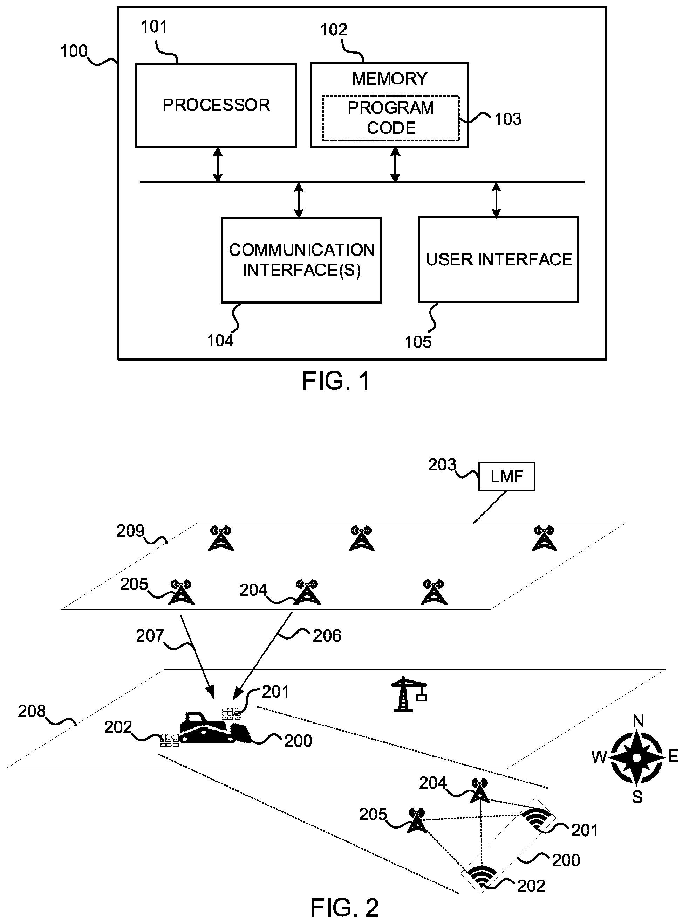

FIG. 1 illustrates an example of an apparatus 100 configured to practice one or more example embodiments. The apparatus 100 may be configured to at least assist in positioning a UE together with orientation or heading of the UE. The apparatus 100 may be, for example, a network node, a user node, or a network entity configured for a location management function. The user node may be, for example, a UE. The network node may be, for example, a 5G node, gNB, and/or a 4G node, eNB. The network entity may be, for example, a location server.

The apparatus 100 may comprise at least one processor 101. The at least one processor 101 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 100 may further comprise at least one memory 102. The memory 102 may be configured to store, for example, computer program code 103 or the like, for example operating system software and application software. The memory 102 may comprise one or more volatile memory devices, one or more non-volatile memory devices, and/or a combination thereof. For example, the memory 102 may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 100 may further comprise one or more communication interfaces 104 configured to enable apparatus 100 to transmit and/or receive information, to/from other apparatuses. The communication interface may be configured to provide at least one wireless radio connection, such as for example a 3GPP mobile broadband connection (e.g. 3G, 4G, 5G). However, the communication interface 104 may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. The communication interface 104 may comprise, or be configured to be coupled to, at least one antenna to transmit and/or receive radio frequency signals. One or more of the various types of connections may be also implemented as separate communication interfaces, which may be coupled or configured to be coupled to a plurality of antennas.

The apparatus 100 may further comprise a user interface 105 comprising an input device and/or an output device. The input device may take various forms such a keyboard, a touch screen, or one or more embedded control buttons. The output device may for example comprise a display, a speaker, a vibration motor, or the like.

When the apparatus 100 is configured to implement some functionality, some component and/or components of the apparatus 100, such as for example the at least one processor 101 and/or the memory 102, may be configured to implement this functionality. Furthermore, when the at least one processor 101 is configured to implement some functionality, this functionality may be implemented using program code 103 comprised, for example, in the memory 102.

The functionality described herein may be performed, at least in part, by one or more computer program product components such as software components. According to an embodiment, the apparatus 100 comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 100 comprises means for performing at least one method described herein. In one example, the means comprises the at least one processor 101, the at least one memory 102 including program code 103 configured to, when executed by the at least one processor 101, cause the apparatus 100 to perform the method.

Apparatus 100 may comprise for example a computing device such as for example a server device, a client device, a mobile phone, a tablet computer, a laptop, or the like. In one example, the apparatus 100 may comprise a vehicle. Although the apparatus 100 is illustrated as a single device it is appreciated that, wherever applicable, functions of apparatus 100 may be distributed to a plurality of devices.

FIG. 2 illustrates an example of obtaining a position and orientation of an industrial user equipment 200 with a minimal number of network nodes 204, 205 according to an example embodiment. A network illustrated in FIG. 2 may comprise the network nodes 204, 205, 209, a user node 200, and an LMF 203. The user node 200 may be also referred to as the user equipment (UE) 200. The LMF 203 may be, for example, a location server or a distributed location system. In general, the LMF is a network entity supporting location determination for a UE. The UE 200 may communicate with one or more base stations 204, 205, 209 over wireless radio channel(s). The base stations may be also called network nodes. In general, a network node may comprise any suitable radio access point. For example, the UE 200 may be configured to communicate with the network node 204, 205, 209, such as a 5G node, gNB, and/or a 4G node, eNB.

The UE 200 may be a relatively large-sized UE, such as an automated guided truck or forklift operating at an industrial area 208. Alternatively, the UE 200 may be a relatively large sized-UE in a non-industrial area, such as a train or a bus. The UE 200 may be equipped with at least two antennas 201, 202. In an embodiment, the antennas 201, 202 may be antenna panels or antenna arrays. The antennas 201, 202 may be located at a fixed distance from each other. The distance between the antennas 201, 202 may be sufficiently large such that orientation of the UE 200 may be estimated based on locations of the antennas 201, 202 with respect to network nodes assisting in the positioning.

The UE 200 may use the different antennas 201, 202 for receiving and transmitting reference signals for positioning. One of the antennas may be a primary antenna panel 201 and the other may be a secondary antenna 202. In an embodiment, the UE 200 may comprise more than two antenna panels, wherein one of the antenna panels is configured as the primary antenna panel and the rest are configured as the secondary antenna panel. In an embodiment, the primary antenna 201 may be configured by the network to dispatch an uplink reference signal for positioning to two network nodes 204, 205. In response, the network nodes 204, 205 may dispatch a downlink reference signal 206, 207 for positioning to the UE 200. The downlink reference signal may be received at both antennas 201, 202. The UE 200 may obtain times of transmission and reception at the different antennas 201, 202 to compute a round-trip time (RTT). The described process of mixing the signaling between the network and the different antennas of the UE may be referred as mixed-RTT.

In addition, the UE 200 may measure time difference of arrival at the two antennas 201, 202 based on TOAs (time of arrival) of the downlink reference signals at the antennas 201, 202. The time difference of arrival measurement may be based on time of arrival measurements of the downlink reference signal received from the same network node at the primary and the secondary antenna. The UE 200 may determine a measurement report comprising the mixed-RTT measurement with respect to each network node 204, 205, the time difference of arrival measurements and the distance between the antennas 201, 202 Thereafter, the UE 200 may be configured to transmit the measurement report to the LMF. The LMF may then infer locations of the antennas 201, 202 based on the measurement report. The LMF may further use the locations of the antennas 201, 202 to estimate the position and orientation of the UE 200, as described in more detail in the following sections.

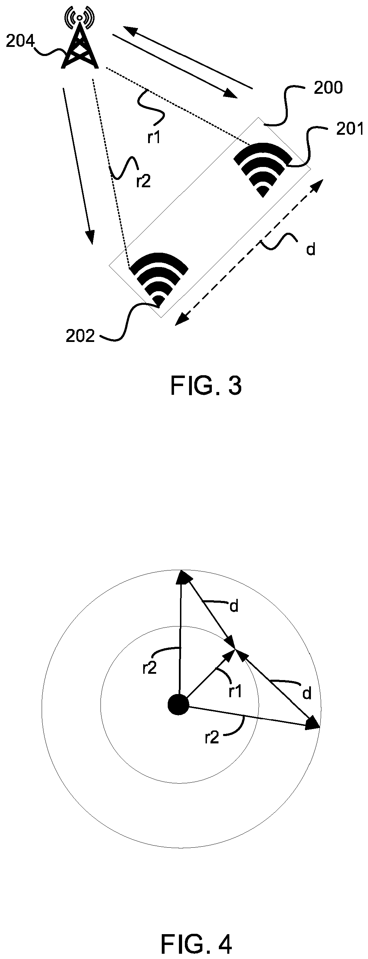

FIG. 3 illustrates an example of mixing signaling with a network and a UE carrying two antennas at a fixed distance from each other according to an example embodiment. FIG. 3 illustrates an example of communication and geometry between one network node 204 and the UE 200 of the network in FIG. 2.

Based on the mixed-RTT measurements obtained from the mixed signaling, the LMF may obtain sum of distances r1, r2 between the transmitting and receiving network node 204 and the respective antennas 201, 202 of the UE 200. In an embodiment, the mixed round-trip time may start from the time of transmitting a reference signal to the network from the primary antenna 201 and end at the time of receiving a signal from the network at the secondary antenna 202. Hence, the mixed round-trip time may be exploited by the LMF to estimate the sum r1+r2, for example, with equation: $b = \frac{r 1}{c} + {Δ}_{gNB} + \frac{r 2}{c} ,$ wherein b denotes the mixed round-trip time, c denotes the speed of light, r1 denotes the distance between the network node 204 and the primary antenna 201, r2 denotes the distance between the network node 204 and the secondary antenna 202 and Δ*_{gNB}* denotes time difference of reception and transmission at the network node 204 (i.e. processing delay at the network node). The mixed round-trip time may be measured by the UE 200 and dispatched to the LMF in a measurement report.

The measurement report may further comprise the time difference of arrival of the downlink reference signal transmitted by the network node 204 and received by the two antennas 201, 202. The time difference of arrival between the antennas 201, 202 may be used by the LMF to estimate a difference r1-r2, for example, with an equation: $f = \frac{r 1}{c} - \frac{r 2}{c} ,$ where f denotes the time difference of arrival. The RTT and the time difference of arrival measurements may be computed with respect to each network node involved in the positioning process and included in the measurement report by the UE 200.

The measurement report may further comprise a fixed geometry or a topology between the antenna panels 201, 202. For example, when the positioning process involves the two antennas 201, 202, a distance d between the antennas 201, 202 may be reported by the UE 200. If the UE 200 is equipped with more than two antenna panels, distance between each pair of antenna panels may be included in the measurement report. The LMF may use the information on a) r1+r2; b) r1-r2; c) d, to infer the location of the antennas 201, 202. Based the locations of the antennas 201, 202 and their distances r1, r2 from the one or more network nodes 204, the LMF may estimate both position and orientation or heading of the UE 200.

FIG. 4 illustrates an example of obtaining a set of valid candidate locations for antennas according to an example embodiment. The accuracy of estimation of the position and orientation/heading of UE may depend on relative values of distances r1, r2 and d. The distances r1 and r2 may be the distances of the antennas as seen from a single or a plurality of network nodes and d the distance between the antennas. By combining the distances r1, r2, and d, the candidate points of the location of antennas or antenna panels of the UE may be limited. Based on the distances r1, r2, the valid candidate points may lie on two concentric circles with radius r1, r2, respectively. Further, the distances r1, r2 may be distant to each other by the distance d between the antennas, as shown in FIG. 4. By combining the above values obtained for two network nodes, the locations of the two antennas may be derived. The locations of the antenna panels may be further used to infer orientation or heading of the UE. The location of the antennas, as well as the orientation of the UE, may be determined in a standalone fashion using only the above metrics or in combination with other methods. In an embodiment, the measurement report comprises measurements with respect to only one network node. The UE may further include additional position metrics, such as its velocity and/or angle of arrival to the measurement report and the LMF may use the additional position metrics together with a local tracking algorithm to refine the current position and orientation of the UE. The LMF may use, for example, location prediction algorithms such as machine-learning methods, time-series analysis or Kalman filtering as the assisting method for positioning.

In an embodiment, the primary and the secondary antennas or antenna panels or antenna arrays may be located at separate UEs communicatively coupled to each other. The two UEs may be mounted on a device and the locations of the antenna panels of the coupled UEs may be used to infer orientation of the device. The device may be, for example, an industrial vehicle, a commercial vehicle or a private vehicle. The distance d between the primary and the secondary antenna panels may be fixed. Alternatively, the distance d may be dynamic such that it changes over time. For example, at least two UE devices/radio heads may be available on an object which position is to be tracked. In an embodiment, the UEs/radio heads may be mounted on different moving parts of the same object. Hence, by keeping track of the associated dynamic distance d between the two UEs (and antenna panels, respectively), the changed orientation of one part relative to another may be obtained and tracked by the network. By using two or more low-cost UEs with single antennas or antenna panels, a cost-efficient implementation for obtaining the position and orientation of the track device may be provided.

In an embodiment, one of the UEs may be a primary UE and the other a secondary UE. The primary and the secondary UE may be communicatively coupled to each other, for example, via a cable, an optical link or wirelessly. The primary UE may configure the secondary UE for device-to-device reporting including clock synchronization between the UEs. In an embodiment, only the primary UE may be connected to and configured by the network. Hence, all relevant information for the secondary UE may be conveyed from the primary UE to the secondary UE via the local link. Therefore, from network perspective, there may be no variation between the embodiment comprising multiple antennas on a single UE and the embodiment where the measurements are obtained from multiple UEs with single antenna panels, i.e. the network sees only a single UE.

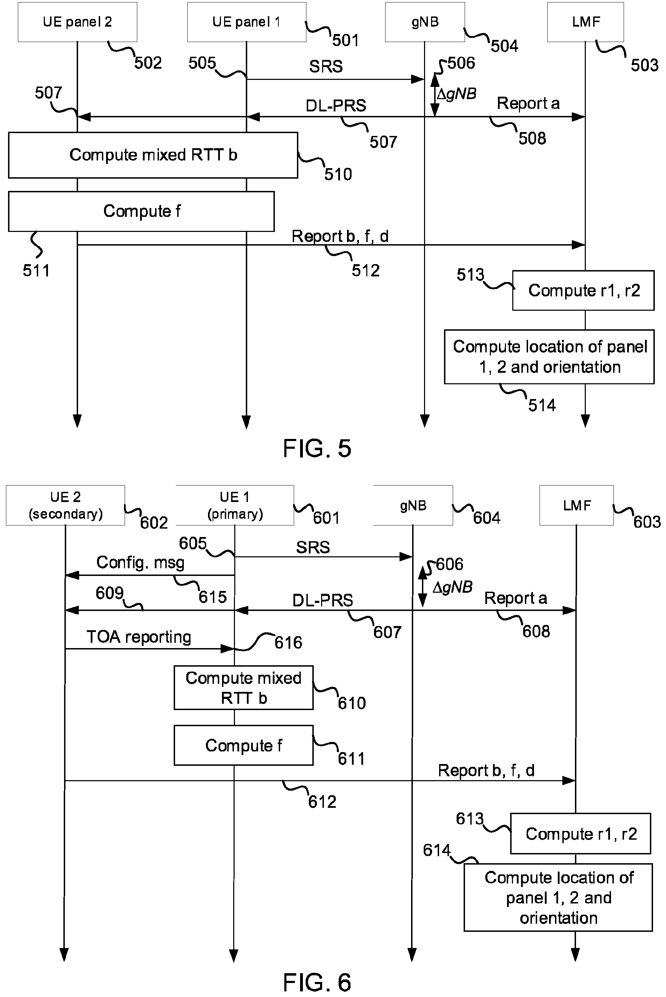

FIG. 5 illustrates an example of a message sequence chart for obtaining a location and an orientation of a UE with two antenna panels 501, 502 according to an example embodiment.

At 505, the UE may dispatch an SRS (sounding reference signal) as an uplink reference signal for positioning to at least one network node, such as gNB 504. The SRS may be dispatched by a primary antenna panel 501 (UE panel 1) of the UE.

At 507, the gNB 504 may dispatch a DL-PRS signal as a downlink reference signal for positioning to the UE. The DL-PRS signal may be received by both the primary antenna panel 501 and a secondary antenna panel 502. The secondary antenna panel 502 may be located at a fixed distance d from the primary antenna panel 501 at the UE. The distance d may be sufficient such that the orientation of the UE may be estimated based on the distance d together with computed distances of the antenna panels 501, 502 with respect to the gNB 504.

At 506, the gNB 504 may compute time difference *a*=ΔgNB between reception of the SRS signal and transmission of the DL-PRS signal. The time difference measurement a may represent processing delay at the gNB 504. At 508, the gNB 504 may transmit a report comprising the time difference a to an LMF 503.

At 510, the UE may compute a mixed-RTT measurement b based on the time of transmission of the SRS signal from the primary antenna panel 501 and the time of reception of the DL-PRS signal at the secondary antenna panel 502.

The UE may be configured to measure time of arrival of the downlink reference signal at each antenna panel 501, 502. At 511, the UE may compute a time difference of arrival measurement f of the DL-PRS signal between the primary antenna panel 501 and the secondary antenna panel 502.

At 512, the UE may report the mixed round-trip time measurement b, the time difference of arrival measurement f and the distance d between the primary and the secondary antenna panel 501, 502 to the LMF. In an embodiment, the reference signals for positioning (SRS, DL-PRS) may be dispatched between at least two gNBs and the UE and the measurement report comprises the mixed round-trip time measurement and the time difference of arrival measurement with respect to each gNB.

In response to receiving the reports from the gNB 504 and the UE, the LMF may use the measurements a, *b, f,* d obtained from the reports to estimate the position and orientation of the UE using, for example, the following set of equations: $\left\{\begin{matrix}a = {Δ}_{gNB} \\ b = \frac{{r}_{1}}{c} + {Δ}_{gNB} + \frac{{r}_{2}}{c} \\ f = \frac{{r}_{1}}{c} - \frac{{r}_{2}}{c}\end{matrix}\right. ,$ wherein *r1* denotes distance between the primary antenna panel 501 and the gNB 504, *r2* denotes distance between the secondary antenna panel 502 and the gNB 504 and c denotes the speed of light.

At 513, the LMF 503 may compute the distances *r1* and *r2*. For example, the distances *r1, r2* may be derived from the above equations: $r 1 = c \frac{\left(b-a+f\right)}{2} ,$ $r 2 = c \frac{\left(b-a-f\right)}{2} .$ In an embodiment, the measurement report may comprise mixed round-trip measurements with respect to multiple network nodes and time difference of arrival measurements associated to the time difference of reception of the same downlink reference signals received from multiple network nodes between the primary and secondary antenna panel 501, 502. The LMF may compute the distances between the primary and the secondary antenna panel 501, 502 and the multiple network nodes based on the respective mixed round-trip measurements and time difference of arrival measurements.

At 514, the LMF 503 may compute the locations of the primary and the secondary antenna panel 501, 502 based on the values of distances *r1, r2* and d. At 514, also the orientation of the UE may be computed by the LMF 503. The LMF 503 may estimate the orientation based on the locations of the antenna panels 501, 502 and their distances *r1, r2* from the one or more gNBs 504.

In an embodiment, the LMF 503 may compute the locations of the antenna panels based on the distances *r1, r2,* d and a local tracking algorithm for enhanced accuracy. For example, the UE may additionally report its velocity and/or one or more other position metrics to refine the current position and orientation of the UE. The position metric may comprise, for example, an angle of arrival of the downlink reference signal for positioning. The local tracking algorithm may comprise, for example, a location prediction algorithm such as a machine-learning method, time-series analysis, Kalman filtering, etc.

FIG. 6 illustrates an example of a message sequence chart for obtaining a location and an orientation of an object comprising two UEs 601, 602 according to an example embodiment. The UEs 601, 602 may be mounted, for example, to a device such as an industrial automated vehicle or a non-industrial vehicle. Both UEs 601, 602 may comprise a single antenna, an antenna array or an antenna panel. The UEs 601, 602 may be coupled to each other via a local link, such as a cable or an optical link. In an embodiment, the UEs 601, 602 may be coupled via a wireless link. The wireless link may be established using, for example, LTE/5G SL/D2D (sidelink/device-to-device) communications, Bluetooth or WLAN involving a preceding calibration process. The UEs 601, 602 may be calibrated once such that during the positioning session they may compensate for the time-difference of their clocks. The calibration may be performed offline, for example, by synchronization via a cable, while the positioning may be executed online. One of the UEs 601, 602 may be a primary UE 601 configured to compute mixed round-trip time and time difference measurements associated with the both UEs 601, 602 and report the measurements to an LMF 603. The other UE may be a secondary UE 602 configured to report time of arrival measurements to the primary UE 601 for computing. In an embodiment, the primary UE 601 may be coupled to a plurality of secondary UEs. The secondary UE 602 may be located at a fixed distance d from the primary UE 601. Alternatively, the distance d between the UEs 601, 602, and their respective antennas, may vary and the primary UE may monitor the distance d. In an embodiment, the secondary UE 602 may be connected with the primary UE 601 via a cable and take pre-configured locations within the device/object. The secondary UE 602 may inform the primary UE 601 of which of the pre-configured locations within the device/object it is taking each time. In another example embodiment, the secondary UE 602 may be connected to the primary UE 601 via an optical or wireless link, and the primary UE 601 uses measurement information on the optical or wireless link to obtain the distance to the secondary UE 602. Any common distance measurement technique may be used to estimate the distance between the UEs wirelessly.

At 605, the primary UE 601 may dispatch an SRS signal as an uplink reference signal for positioning to at least one network node, such as gNB 604. The SRS signal may be dispatched from the antenna of the primary UE 601.

At 615, the primary UE 601 may dispatch a configuration message to the secondary UE 602. In response to the configuration message, the primary UE 601 may synchronize with the secondary UE 602 by exchanging clock information. The configuration message may further comprise a request for the secondary UE 602 to report its time of arrival information to the primary UE 601.

At 607, the gNB 604 may dispatch a DL-PRS signal as a downlink reference signal for positioning at least to the primary UE 601. The DL-PRS signal may be received by both the primary UE 601 and the secondary UE 602 at their single antennas. In an embodiment, both UEs 601, 602 may be connected and configured by the network and receive the DL-PRS directly from the gNB 604. In an embodiment, only the primary UE 601 is connected to the network, and all relevant information for the secondary UE 602 is conveyed from the primary UE 601 to the secondary UE 602. The primary UE 601 may transmit, for example in the configuration message, positioning assistance data for measuring time of arrival of the downlink reference signal for positioning received from the at least one network node at the secondary UE 602. The positioning assistance data may comprise, for example, at which time and frequency resource it should measure DL-PRS from the network. At 609, the DL-PRS signal may be received by the secondary UE 602 from the gNB 604. In an embodiment, the DL-PRS signal may be received by the antenna of the secondary UE 602 from the at least one network node via the primary UE 601.

At 606, the gNB 604 may compute time difference *a*=ΔgNB between reception of the SRS signal from the primary UE 601 and transmission of the DL-PRS signal to at least the primary UE 601. The time difference a may represent processing delay at the gNB 604. At 608, the gNB 604 may dispatch a report comprising the time difference a to the LMF 603.

Both the secondary UE 602 and the primary UE 601 may be configured to measure time of arrival of the downlink reference signals for positioning. At 616, the secondary UE 602 may transmit the time of arrival of the DL-PRS signal to the primary UE 601.

At 610, the primary UE 601 may compute a mixed-RTT measurement b based on the time of transmission of the SRS signal from the antenna of the primary UE 601 and the time of reception of the DL-PRS signal at the antenna of the secondary UE 602.

At 611, the primary UE 601 may compute a time difference of arrival measurement f of the DL-PRS signal between the primary UE 601 and the secondary UE 602, i.e. between their respective antennas.

At 612, the primary UE 601 may report the mixed round-trip time measurement b, the time difference of arrival measurement f and the distance d between the primary and the secondary UE 601, 602 to the LMF 603. In an embodiment, the reference signals for positioning (SRS, SRS for positioning, DL-PRS) may be dispatched between at least two network nodes and the UEs 601, 602 and the measurement report comprises the mixed round-trip time measurement and the time difference of arrival measurement with respect to each of the network nodes.

In response to receiving the reports from the gNB 604 and the primary UE 601, the LMF 603 may use the measurements *a, b, f,* d obtained from the reports to estimate the position and orientation of the primary UE 602 and the associated secondary UE 602 using, for example, the following set of equations: $\left\{\begin{matrix}a = {Δ}_{gNB} \\ b = \frac{{r}_{1}}{c} + {Δ}_{gNB} + \frac{{r}_{2}}{c} \\ f = \frac{{r}_{1}}{c} - \frac{{r}_{2}}{c}\end{matrix}\right. ,$ wherein *r1* denotes distance between the primary UE 601 (and respective antenna) and the gNB 604, *r2* denotes distance between the secondary UE 602 (and respective antenna) and the gNB 604 and c denotes the speed of light.

At 613, the LMF 603 may compute the distances *r1, r2.* For example, the distances *r1, r2* may be derived from the above equations: $r 1 = c \frac{\left(b-a+f\right)}{2} ,$ $r 2 = c \frac{\left(b-a-f\right)}{2} .$ In an embodiment, the measurement report may comprise mixed round-trip measurements with respect to multiple network nodes and time difference of arrival measurements associated to the time difference of reception of the same downlink reference signals received from multiple network nodes between the primary and secondary UE 601, 603. The LMF 603 may compute the distances between the primary and the secondary UE 601, 602 and the multiple network nodes based on the respective mixed round-trip measurements and time difference of arrival measurements.

At 614, the LMF 603 may compute the locations of the primary and the secondary UE 601, 602 based on the values of distances *r1, r2* and d. At 614, also the orientation of the primary UE 601 and the associated secondary UE 620 may be computed by the LMF 603. The LMF 603 may estimate the orientation based on the locations of the UEs 601, 602 and their distances *r1, r2* from the one or more gNBs 604.

In an embodiment, the LMF 603 may compute the locations of the UEs 601, 602 based on the distances *r1, r2,* d and a local tracking algorithm for enhanced accuracy. For example, the primary UE 601 may additionally report its velocity and/or one or more other position metrics to refine the current position and orientation. The position metric may comprise, for example, an angle of arrival of the downlink reference signal for positioning. The local tracking algorithm may comprise, for example, a location prediction algorithm such as a machine-learning method, time-series analysis, Kalman filtering, etc.

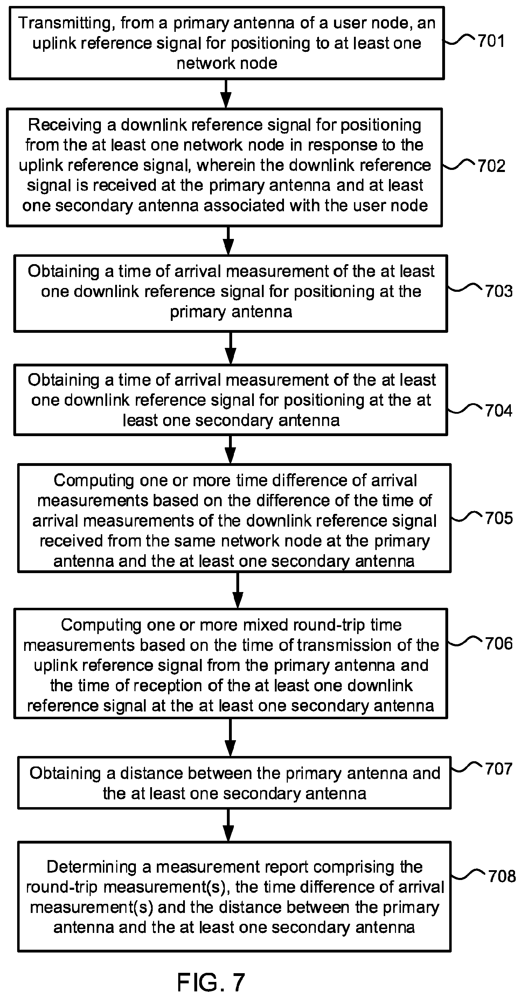

FIG. 7 illustrates a method for determining measurements for positioning of an apparatus according to an example embodiment.

At 701, an uplink reference signal for positioning is transmitted from a primary antenna of a user node to at least one network node.

At 702, a downlink reference signal for positioning is received from the at least one network node in response to the uplink reference signal, wherein the downlink reference signal is received at the primary antenna and at least one secondary antenna associated with the user node.

At 703, a time of arrival measurement of the at least one downlink reference signal for positioning is obtained at the primary antenna.

At 704, a time of arrival measurement of the at least one downlink reference signal for positioning is obtained at the at least one secondary antenna.

At 705, one or more time difference of arrival measurements is computed based on the difference of the time of arrival measurements of the downlink reference signal received from the same network node at the primary antenna and the at least one secondary antenna.

At 706, one or more mixed round-trip time measurement is computed based on the time of transmission of the uplink reference signal from the primary antenna and the time of reception of the at least one downlink reference signal at the at least one secondary antenna.

At 707, a distance between the primary antenna and the at least one secondary antenna is obtained.

At 708, a measurement report comprising the one or more mixed round-trip measurement, the one or more time difference of arrival measurement and the distance between the primary antenna and the at least one secondary antenna is determined.

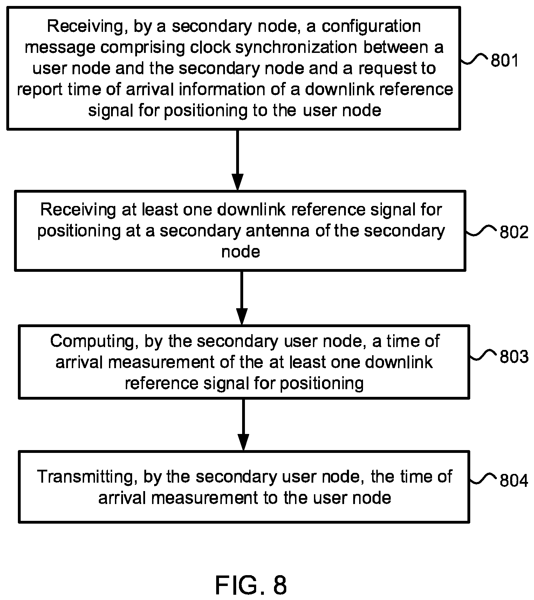

FIG. 8 illustrates a method for assisting in determining measurements for positioning of an apparatus according to an example embodiment.

At 801, a configuration message is received by a secondary user node, comprising clock synchronization between a user node and the secondary user node and a request to report time of arrival information of a downlink reference signal for positioning to the user node.

At 802, at least one downlink reference signal for positioning is received at a secondary antenna of the secondary user node.

At 803, a time of arrival measurement of the at least one downlink reference signal for positioning is computed by the secondary user node.

At 804, the time of arrival measurement is transmitted to the user node by the secondary user node.

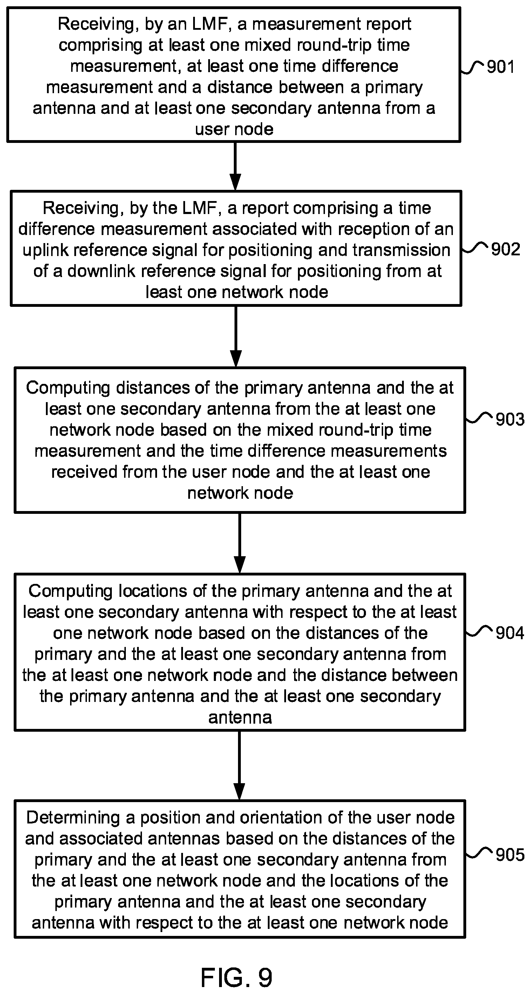

FIG. 9 illustrates a method for determining positioning of an apparatus according to an example embodiment.

At 901, a measurement report comprising at least one mixed round-trip time measurements, at least one time difference measurements and a distance between a primary antenna and at least one secondary antenna from a user node is received by an LMF. The mixed round-trip measurement may be based on the difference of a time of transmission of an uplink reference signal from the primary antenna to at least one network node and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna.

At 902, a report comprising a time difference measurement associated with reception of the uplink reference signal for positioning and transmission of the downlink reference signal for positioning is received from at least one network node by the LMF.

At 903, distances of the primary antenna and the at least one secondary antenna from the at least one network node is computed based on the mixed round-trip time measurement and the time difference measurements received from the at least one network node and the user node.

At 904, locations of the primary antenna and the at least one secondary antenna with respect to the at least one network node is computed based on the distances of the primary and the at least one secondary antenna from the at least one network node and the distance between the primary antenna and the at least one secondary antenna.

At 905, a position and orientation or heading of the user node and associated antennas is determined based on the distances of the primary and the at least one secondary antenna from the at least one network node and the locations of the primary antenna and the at least one secondary antenna with respect to the at least one network node.

Further features of the methods directly result from the functionalities and parameters of the apparatuses, as described in the appended claims and throughout the specification and are therefore not repeated here. It is noted that one or more operations of the method may be performed in different order.

An apparatus, for example a network node, a user node or a network entity such as an LMF, may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at one memory and the program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor (s), such as a microprocessor (s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for a user node, the apparatus configured to:
transmit, from a primary antenna of the user node, an uplink reference signal for positioning to at least one network node;
receive a downlink reference signal for positioning from the at least one network node in response to the uplink reference signal, wherein the downlink reference signal is received at the primary antenna and at least one secondary antenna associated with and proximate to the user node;
obtain, by the user node, a time of arrival measurement of the at least one downlink reference signal for positioning at the primary antenna;
obtain, by the user node, a time of arrival measurement of the at least one downlink reference signal for positioning at the at least one secondary antenna;
compute, by the user node, one or more time difference of arrival measurements based on the difference of the time of arrival measurements of the downlink reference signal received from the same network node at the primary antenna and the at least one secondary antenna;
compute, by the user node, one or more mixed round-trip time measurements based on the time of transmission of the uplink reference signal from the primary antenna and the time of reception of the at least one downlink reference signal at the at least one secondary antenna;
obtain, by the user node, a distance between the primary antenna and the at least one secondary antenna;
determine, by the user node, a measurement report comprising the one or more mixed round-trip time measurements, the one or more time difference of arrival measurements and the distance between the primary antenna and the at least one secondary antenna; and
dispatch, by the user node, the measurement report to a location management function for positioning.

2. The apparatus of claim 1, wherein at least
one of the primary antenna or the secondary antenna is an antenna panel or an antenna array.

3. The apparatus of any of claims 1 to 2, wherein the
at least one secondary antenna is an antenna of a secondary user node communicatively coupled with the user node; and
the time of arrival measurement of the at least one downlink reference signal for positioning at the secondary antenna is obtained from the secondary user node.

4. The apparatus of claim 3, configured to:
transmit, by the user node, a configuration message to at least one secondary user node, wherein the configuration message comprises clock synchronization between the user node and the secondary user node and a request to report time of arrival information of the downlink reference signal for positioning to the user node.

5. The apparatus of claim 3 or 4, wherein the
apparatus is configured to:
transmit, by the user node, the downlink reference signal for positioning received from the at least one network node to the secondary user node.

6. The apparatus of any of claims 3 to 5, wherein the apparatus is configured to:
transmit, by the user node, positioning assistance data for measuring the time of arrival of the downlink reference signal for positioning received from the at least one network node to the secondary user node.

7. The apparatus of any preceding claim, wherein the apparatus is further configured to:
obtain at least one of a velocity, a position metric or an angle of arrival measurement associated with at least one of the user node or the secondary user node coupled with the user node;
and
the measurement report comprises at least one of the velocity, the position metric or the angle of arrival measurement.

8. An apparatus for a location management function, configured to:
receive, by the location management function, from a user node, a measurement report comprising at least one mixed round-trip time measurement, at least one time difference measurement and a distance between a primary antenna and at least one secondary antenna from a user node, wherein the mixed round-trip measurement is based on the difference of a time of transmission of an uplink reference signal from the primary antenna to at least one network node and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna;
receive, by the location management function, a report comprising a time difference measurement associated with reception of the uplink reference signal for positioning and transmission of the downlink reference signal for positioning from the at least one network node;
compute distances of the primary antenna and the at least one secondary antenna from the at least one network node based on the mixed round-trip time measurement and the time difference measurements received from the at least one network node and the user node;
compute locations of the primary antenna and the at least one secondary antenna with respect to the at least one network node based on the distances of the primary and the at least one secondary antenna from the at least one network node and the distance between the primary antenna and the at least one secondary antenna; and
determine a position and orientation or heading of the user node and associated antennas based on the distances of the primary and the at least one secondary antenna from the at least one network node and the locations of the primary antenna and the at least one secondary antenna with respect to the at least one network node.

9. The apparatus of claim 8, wherein the
measurement report further comprises at least one of a velocity, a position metric measurement or an angle of arrival measurement associated with at least one of the user node or a secondary user node coupled with the user node; and
the position and orientation or heading of the user node and associated antennas is determined based on at least one of the velocity, the position metric measurement or the angle of arrival measurement using a local tracking algorithm.

10. The apparatus of claim 9, wherein the local
tracking algorithm comprises one of a time-series analysis, a Kalman filtering or machine learning based prediction.

11. A method, comprising:
transmitting, from a primary antenna of a user node, an uplink reference signal for positioning to at least one network node;
receiving a downlink reference signal for positioning from the at least one network node in response to the uplink reference signal, wherein the downlink reference signal is received at the primary antenna and at least one secondary antenna associated with and proximate to the user node;
obtaining, by the user node, a time of arrival measurement of the at least one downlink reference signal for positioning at the primary antenna;
obtaining, by the user node, a time of arrival measurement of the at least one downlink reference signal for positioning at the at least one secondary antenna;
computing, by the user node, one or more time difference of arrival measurements based on the difference of the time of arrival measurements of the downlink reference signal received from the same network node at the primary antenna and the at least one secondary antenna;
computing, by the user node, one or more mixed round-trip time measurements based on the time of transmission of the uplink reference signal from the primary antenna and the time of reception of the at least one downlink reference signal at the at least one secondary antenna;
obtaining, by the user node, a distance between the primary antenna and the at least one secondary antenna;
determining, by the user node, a measurement report comprising the one or more mixed round-trip measurements, the one or more time difference of arrival measurements and the distance between the primary antenna and the at least one secondary antenna; and
dispatching, by the user node, the measurement report to a location management function for positioning.

12. A method, comprising:
receiving, by a location management function, from a user node, a measurement report comprising at least one mixed round-trip time measurement, at least one time difference measurement and a distance between a primary antenna and at least one secondary antenna from a user node, wherein the mixed round-trip measurement is based on the difference on a time of transmission of an uplink reference signal to at least one network node from the primary antenna and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna;
receiving, by the location management function, a report comprising a time difference measurement associated with reception of the uplink reference signal for positioning and transmission of the downlink reference signal for positioning from the at least one network node;
computing distances of the primary antenna and the at least one secondary antenna from the at least one network node based on the mixed round-trip time measurement and the time difference measurements received from the at least one network node and the user node;
computing locations of the primary antenna and the at least one secondary antenna with respect to the at least one network node based on the distances of the primary and the at least one secondary antenna from the at least one network node and the distance between the primary antenna and the at least one secondary antenna; and
determining a position and orientation or heading of the user node and associated antennas based on the distances of the primary and the at least one secondary antenna from the at least one network node and the locations of the primary antenna and the at least one secondary antenna with respect to the at least one network node.

13. A computer program comprising instructions which, when the program is executed by a computer comprised in an apparatus for a user node, cause the computer to:
transmit, from a primary antenna of the user node, an uplink reference signal for positioning to at least one network node;
receive a downlink reference signal for positioning from the at least one network node in response to the uplink reference signal, wherein the downlink reference signal is received at the primary antenna and at least one secondary antenna associated with and proximate to the user node;
obtain, by the user node, a time of arrival measurement of the at least one downlink reference signal for positioning at the primary antenna;
obtain, by the user node, a time of arrival measurement of the at least one downlink reference signal for positioning at the at least one secondary antenna;
compute, by the user node, one or more time difference of arrival measurements based the difference of the time of arrival measurements of the downlink reference signal received from the same network node at the primary antenna and the at least one secondary antenna;
compute, by the user node, one or more mixed round-trip time measurement based on the time of transmission of the uplink reference signal from the primary antenna and the time of reception of the at least one downlink reference signal at the at least one secondary antenna;
obtain, by the user node, a distance between the primary antenna and the at least one secondary antenna; and
determine, by the user node, a measurement report comprising the one or more mixed round-trip measurements, the one or more time difference of arrival measurements and the distance between the primary antenna and the at least one secondary antenna; and
dispatch, by the user node, the measurement report to a location management function for positioning.

14. A computer program comprising instructions which, when the program is executed by a computer comprised in an apparatus for a location management function, cause the computer to:
receive, by the location management function, from a user node, a measurement report comprising at least one mixed round-trip time measurement, at least one time difference measurement and a distance between a primary antenna and at least one secondary antenna from a user node, wherein the mixed round-trip measurement is based on the difference on a time of transmission of an uplink reference signal to at least one network node from the primary antenna and a time of reception of a downlink reference signal from the at least one network node at the at least one secondary antenna and the time difference of arrival is based on the difference of time of arrival measurements of the downlink reference signal received from the same network node at the primary antenna and the at least one secondary antenna;
receive, by the location management function, a report comprising a time difference measurement associated with reception of the uplink and transmission of the downlink reference signal for positioning from the at least one network node;
compute distances of the primary antenna and the at least one secondary antenna from the at least one network node based on the mixed round-trip time measurement and the time difference measurements received from the at least one network node and the user node;
compute locations of the primary antenna and the at least one secondary antenna with respect to the at least one network node based on the distances of the primary and the at least one secondary antenna from the at least one network node and the distance between the primary antenna and the at least one secondary antenna; and
determine a position and orientation or heading of the user node and associated antennas based on the distances of the primary and the at least one secondary antenna from the at least one network node and the locations of the primary antenna and the at least one secondary antenna with respect to the at least one network node.

## Patentansprüche

1. Vorrichtung für einen Benutzerknoten, wobei die Vorrichtung konfiguriert ist zum:
Übertragen, von einer primären Antenne des Benutzerknotens, eines Aufwärtsstrecken-Referenzsignals zur Positionierung an mindestens einen Netzwerkknoten;
Empfangen eines Abwärtsstrecken-Referenzsignals zur Positionierung von dem mindestens einen Netzwerkknoten als Reaktion auf das Aufwärtsstrecken-Referenzsignal, wobei das Abwärtsstrecken-Referenzsignal an der primären Antenne und an mindestens einer sekundären Antenne empfangen wird, die dem Benutzerknoten zugeordnet und in dessen Nähe angeordnet ist;
Erhalten, durch den Benutzerknoten, einer Ankunftszeitmessung des mindestens einen Abwärtsstrecken-Referenzsignals zur Positionierung an der primären Antenne;
Erhalten, durch den Benutzerknoten, einer Ankunftszeitmessung des mindestens einen Abwärtsstrecken-Referenzsignals zur Positionierung an der mindestens einen sekundären Antenne;
Berechnen, durch den Benutzerknoten, einer oder mehrerer Ankunftszeitdifferenzmessungen basierend auf der Differenz der Ankunftszeitmessungen des von demselben Netzwerkknoten empfangenen Abwärtsstrecken-Referenzsignals an der primären Antenne und der mindestens einen sekundären Antenne;
Berechnen, durch den Benutzerknoten, einer oder mehrerer gemischter Umlaufzeitmessungen basierend auf der Sendezeit des Aufwärtsstrecken-Referenzsignals von der primären Antenne und der Empfangszeit des mindestens einen Abwärtsstrecken-Referenzsignals an der mindestens einen sekundären Antenne;
Erhalten, durch den Benutzerknoten, eines Abstands zwischen der primären Antenne und der mindestens einen sekundären Antenne;
Bestimmen, durch den Benutzerknoten, eines Messberichts, der die eine oder mehreren gemischten Umlaufzeitmessungen, die eine oder mehreren Ankunftszeitdifferenzmessungen und den Abstand zwischen der primären Antenne und der mindestens einen sekundären Antenne umfasst; und
Senden, durch den Benutzerknoten, des Messberichts an eine Standortverwaltungsfunktion zur Positionierung.

2. Vorrichtung nach Anspruch 1, wobei mindestens eine von der primären Antenne oder der sekundären Antenne ein Antennenpaneel oder ein Antennenarray ist.

3. Vorrichtung nach einem der Ansprüche 1 bis 2, wobei die mindestens eine sekundäre Antenne eine Antenne eines sekundären Benutzerknotens ist, der kommunikativ mit dem Benutzerknoten gekoppelt ist; und
die Ankunftszeitmessung des mindestens einen Abwärtsstrecken-Referenzsignals zur Positionierung an der sekundären Antenne von dem sekundären Benutzerknoten erhalten wird.

4. Vorrichtung nach Anspruch 3, die konfiguriert ist zum:
Übertragen, durch den Benutzerknoten, einer Konfigurationsnachricht an mindestens einen sekundären Benutzerknoten, wobei die Konfigurationsnachricht eine Taktsynchronisation zwischen dem Benutzerknoten und dem sekundären Benutzerknoten und eine Anforderung, Ankunftszeitinformationen des Abwärtsstrecken-Referenzsignals zur Positionierung an den Benutzerknoten zu melden, umfasst.

5. Vorrichtung nach Anspruch 3 oder 4, wobei die Vorrichtung konfiguriert ist zum:
Übertragen, durch den Benutzerknoten, des von dem mindestens einen Netzwerkknoten empfangenen Abwärtsstrecken-Referenzsignals zur Positionierung an den sekundären Benutzerknoten.

6. Vorrichtung nach einem der Ansprüche 3 bis 5, wobei die Vorrichtung konfiguriert ist zum:
Übertragen, durch den Benutzerknoten, von Positionierungshilfsdaten zum Messen der Ankunftszeit des von dem mindestens einen Netzwerkknoten empfangenen Abwärtsstrecken-Referenzsignals zur Positionierung an den sekundären Benutzerknoten.

7. Vorrichtung nach einem der vorhergehenden Ansprüche, wobei die Vorrichtung ferner konfiguriert ist zum:
Erhalten mindestens einer von einer Geschwindigkeit, einer Positionsmetrik oder einer Ankunftswinkelmessung, die mindestens einem von dem Benutzerknoten oder dem mit dem Benutzerknoten gekoppelten sekundären Benutzerknoten zugeordnet ist; und
der Messbericht mindestens eine von der Geschwindigkeit, der Positionsmetrik oder der Ankunftswinkelmessung umfasst.

8. Vorrichtung für eine Standortverwaltungsfunktion, die konfiguriert ist zum:
Empfangen, durch die Standortverwaltungsfunktion, von einem Benutzerknoten, eines Messberichts, der mindestens eine gemischte Umlaufzeitmessung, mindestens eine Zeitdifferenzmessung und einen Abstand zwischen einer primären Antenne und mindestens einer sekundären Antenne von einem Benutzerknoten umfasst, wobei die gemischte Umlaufmessung auf der Differenz zwischen einer Sendezeit eines Aufwärtsstrecken-Referenzsignals von der primären Antenne an mindestens einen Netzwerkknoten und einer Empfangszeit eines Abwärtsstrecken-Referenzsignals von dem mindestens einen Netzwerkknoten an der mindestens einen sekundären Antenne basiert und die Ankunftszeitdifferenz auf der Differenz der Ankunftszeitmessungen des von demselben Netzwerkknoten empfangenen Abwärtsstrecken-Referenzsignals an der primären Antenne und der mindestens einen sekundären Antenne basiert;
Empfangen, durch die Standortverwaltungsfunktion, eines Berichts, der eine Zeitdifferenzmessung umfasst, die dem Empfang des Aufwärtsstrecken-Referenzsignals zur Positionierung und der Übertragung des Abwärtsstrecken-Referenzsignals zur Positionierung von dem mindestens einen Netzwerkknoten zugeordnet ist;
Berechnen von Abständen der primären Antenne und der mindestens einen sekundären Antenne von dem mindestens einen Netzwerkknoten basierend auf der gemischten Umlaufzeitmessung und den von dem mindestens einen Netzwerkknoten und dem Benutzerknoten empfangenen Zeitdifferenzmessungen;
Berechnen von Orten der primären Antenne und der mindestens einen sekundären Antenne in Bezug auf den mindestens einen Netzwerkknoten basierend auf den Abständen der primären und der mindestens einen sekundären Antenne von dem mindestens einen Netzwerkknoten und dem Abstand zwischen der primären Antenne und der mindestens einen sekundären Antenne; und
Bestimmen einer Position und einer Ausrichtung oder Richtung des Benutzerknotens und zugeordneter Antennen basierend auf den Abständen der primären und der mindestens einen sekundären Antenne von dem mindestens einen Netzwerkknoten und den Orten der primären Antenne und der mindestens einen sekundären Antenne in Bezug auf den mindestens einen Netzwerkknoten.

9. Vorrichtung nach Anspruch 8, wobei der Messbericht ferner mindestens eine von einer Geschwindigkeit, einer Positionsmetrikmessung oder einer Ankunftswinkelmessung umfasst, die mindestens einem von dem Benutzerknoten oder einem mit dem Benutzerknoten gekoppelten sekundären Benutzerknoten zugeordnet ist; und
die Position und die Ausrichtung oder Richtung des Benutzerknotens und zugeordneter Antennen basierend auf mindestens einer von der Geschwindigkeit, der Positionsmetrikmessung oder der Ankunftswinkelmessung unter Verwendung eines lokalen Verfolgungsalgorithmus bestimmt wird.

10. Vorrichtung nach Anspruch 9, wobei der lokale Verfolgungsalgorithmus eine von einer Zeitreihenanalyse, einer Kalman-Filterung oder einer auf maschinellem Lernen basierenden Vorhersage umfasst.

11. Verfahren, umfassend:
Übertragen, von einer primären Antenne eines Benutzerknotens, eines Aufwärtsstrecken-Referenzsignals zur Positionierung an mindestens einen Netzwerkknoten;
Empfangen eines Abwärtsstrecken-Referenzsignals zur Positionierung von dem mindestens einen Netzwerkknoten als Reaktion auf das Aufwärtsstrecken-Referenzsignal, wobei das Abwärtsstrecken-Referenzsignal an der primären Antenne und an mindestens einer sekundären Antenne empfangen wird, die dem Benutzerknoten zugeordnet und in dessen Nähe angeordnet ist;
Erhalten, durch den Benutzerknoten, einer Ankunftszeitmessung des mindestens einen Abwärtsstrecken-Referenzsignals zur Positionierung an der primären Antenne;
Erhalten, durch den Benutzerknoten, einer Ankunftszeitmessung des mindestens einen Abwärtsstrecken-Referenzsignals zur Positionierung an der mindestens einen sekundären Antenne;
Berechnen, durch den Benutzerknoten, einer oder mehrerer Ankunftszeitdifferenzmessungen basierend auf der Differenz der Ankunftszeitmessungen des von demselben Netzwerkknoten empfangenen Abwärtsstrecken-Referenzsignals an der primären Antenne und der mindestens einen sekundären Antenne;
Berechnen, durch den Benutzerknoten, einer oder mehrerer gemischter Umlaufzeitmessungen basierend auf der Sendezeit des Aufwärtsstrecken-Referenzsignals von der primären Antenne und der Empfangszeit des mindestens einen Abwärtsstrecken-Referenzsignals an der mindestens einen sekundären Antenne;
Erhalten, durch den Benutzerknoten, eines Abstands zwischen der primären Antenne und der mindestens einen sekundären Antenne;
Bestimmen, durch den Benutzerknoten, eines Messberichts, der die eine oder mehreren gemischten Umlaufmessungen, die eine oder mehreren Ankunftszeitdifferenzmessungen und den Abstand zwischen der primären Antenne und der mindestens einen sekundären Antenne umfasst; und
Senden, durch den Benutzerknoten, des Messberichts an eine Standortverwaltungsfunktion zur Positionierung.

12. Verfahren, umfassend:
Empfangen, durch eine Standortverwaltungsfunktion, von einem Benutzerknoten, eines Messberichts, der mindestens eine gemischte Umlaufzeitmessung, mindestens eine Zeitdifferenzmessung und einen Abstand zwischen einer primären Antenne und mindestens einer sekundären Antenne von einem Benutzerknoten umfasst, wobei die gemischte Umlaufmessung auf der Differenz zwischen einer Sendezeit eines Aufwärtsstrecken-Referenzsignals an mindestens einen Netzwerkknoten von der primären Antenne und einer Empfangszeit eines Abwärtsstrecken-Referenzsignals von dem mindestens einen Netzwerkknoten an der mindestens einen sekundären Antenne basiert und die Ankunftszeitdifferenz auf der Differenz der Ankunftszeitmessungen des von demselben Netzwerkknoten empfangenen Abwärtsstrecken-Referenzsignals an der primären Antenne und der mindestens einen sekundären Antenne basiert;
Empfangen, durch die Standortverwaltungsfunktion, eines Berichts, der eine Zeitdifferenzmessung umfasst, die dem Empfang des Aufwärtsstrecken-Referenzsignals zur Positionierung und der Übertragung des Abwärtsstrecken-Referenzsignals zur Positionierung von dem mindestens einen Netzwerkknoten zugeordnet ist;
Berechnen von Abständen der primären Antenne und der mindestens einen sekundären Antenne von dem mindestens einen Netzwerkknoten basierend auf der gemischten Umlaufzeitmessung und den von dem mindestens einen Netzwerkknoten und dem Benutzerknoten empfangenen Zeitdifferenzmessungen;
Berechnen von Orten der primären Antenne und der mindestens einen sekundären Antenne in Bezug auf den mindestens einen Netzwerkknoten basierend auf den Abständen der primären und der mindestens einen sekundären Antenne von dem mindestens einen Netzwerkknoten und dem Abstand zwischen der primären Antenne und der mindestens einen sekundären Antenne; und
Bestimmen einer Position und einer Ausrichtung oder Richtung des Benutzerknotens und zugeordneter Antennen basierend auf den Abständen der primären und der mindestens einen sekundären Antenne von dem mindestens einen Netzwerkknoten und den Orten der primären Antenne und der mindestens einen sekundären Antenne in Bezug auf den mindestens einen Netzwerkknoten.

13. Computerprogramm, das Anweisungen umfasst, die, wenn das Programm von einem in einer Vorrichtung für einen Benutzerknoten umfassten Computer ausgeführt wird, den Computer veranlassen zum:
Übertragen, von einer primären Antenne des Benutzerknotens, eines Aufwärtsstrecken-Referenzsignals zur Positionierung an mindestens einen Netzwerkknoten;
Empfangen eines Abwärtsstrecken-Referenzsignals zur Positionierung von dem mindestens einen Netzwerkknoten als Reaktion auf das Aufwärtsstrecken-Referenzsignal, wobei das Abwärtsstrecken-Referenzsignal an der primären Antenne und an mindestens einer sekundären Antenne empfangen wird, die dem Benutzerknoten zugeordnet und in dessen Nähe angeordnet ist;
Erhalten, durch den Benutzerknoten, einer Ankunftszeitmessung des mindestens einen Abwärtsstrecken-Referenzsignals zur Positionierung an der primären Antenne;
Erhalten, durch den Benutzerknoten, einer Ankunftszeitmessung des mindestens einen Abwärtsstrecken-Referenzsignals zur Positionierung an der mindestens einen sekundären Antenne;
Berechnen, durch den Benutzerknoten, einer oder mehrerer Ankunftszeitdifferenzmessungen basierend auf der Differenz der Ankunftszeitmessungen des von demselben Netzwerkknoten empfangenen Abwärtsstrecken-Referenzsignals an der primären Antenne und der mindestens einen sekundären Antenne;
Berechnen, durch den Benutzerknoten, einer oder mehrerer gemischter Umlaufzeitmessungen basierend auf der Sendezeit des Aufwärtsstrecken-Referenzsignals von der primären Antenne und der Empfangszeit des mindestens einen Abwärtsstrecken-Referenzsignals an der mindestens einen sekundären Antenne;
Erhalten, durch den Benutzerknoten, eines Abstands zwischen der primären Antenne und der mindestens einen sekundären Antenne; und
Bestimmen, durch den Benutzerknoten, eines Messberichts, der die eine oder mehreren gemischten Umlaufmessungen, die eine oder mehreren Ankunftszeitdifferenzmessungen und den Abstand zwischen der primären Antenne und der mindestens einen sekundären Antenne umfasst; und
Senden, durch den Benutzerknoten, des Messberichts an eine Standortverwaltungsfunktion zur Positionierung.

14. Computerprogramm, das Anweisungen umfasst, die, wenn das Programm von einem in einer Vorrichtung für eine Standortverwaltungsfunktion umfassten Computer ausgeführt wird, den Computer veranlassen zum:
Empfangen, durch die Standortverwaltungsfunktion, von einem Benutzerknoten, eines Messberichts, der mindestens eine gemischte Umlaufzeitmessung, mindestens eine Zeitdifferenzmessung und einen Abstand zwischen einer primären Antenne und mindestens einer sekundären Antenne von einem Benutzerknoten umfasst, wobei die gemischte Umlaufmessung auf der Differenz zwischen einer Sendezeit eines Aufwärtsstrecken-Referenzsignals an mindestens einen Netzwerkknoten von der primären Antenne und einer Empfangszeit eines Abwärtsstrecken-Referenzsignals von dem mindestens einen Netzwerkknoten an der mindestens einen sekundären Antenne basiert und die Ankunftszeitdifferenz auf der Differenz der Ankunftszeitmessungen des von demselben Netzwerkknoten empfangenen Abwärtsstrecken-Referenzsignals an der primären Antenne und der mindestens einen sekundären Antenne basiert;
Empfangen, durch die Standortverwaltungsfunktion, eines Berichts, der eine Zeitdifferenzmessung umfasst, die dem Empfang der Aufwärtsstrecke und der Übertragung des Abwärtsstrecken-Referenzsignals zur Positionierung von dem mindestens einen Netzwerkknoten zugeordnet ist;
Berechnen von Abständen der primären Antenne und der mindestens einen sekundären Antenne von dem mindestens einen Netzwerkknoten basierend auf der gemischten Umlaufzeitmessung und den von dem mindestens einen Netzwerkknoten und dem Benutzerknoten empfangenen Zeitdifferenzmessungen;
Berechnen von Orten der primären Antenne und der mindestens einen sekundären Antenne in Bezug auf den mindestens einen Netzwerkknoten basierend auf den Abständen der primären und der mindestens einen sekundären Antenne von dem mindestens einen Netzwerkknoten und dem Abstand zwischen der primären Antenne und der mindestens einen sekundären Antenne; und
Bestimmen einer Position und einer Ausrichtung oder Richtung des Benutzerknotens und zugeordneter Antennen basierend auf den Abständen der primären und der mindestens einen sekundären Antenne von dem mindestens einen Netzwerkknoten und den Orten der primären Antenne und der mindestens einen sekundären Antenne in Bezug auf den mindestens einen Netzwerkknoten.

## Revendications

1. Appareil pour un nœud utilisateur, l'appareil étant configuré pour :
transmettre, à partir d'une antenne primaire du nœud utilisateur, un signal de référence de liaison montante pour le positionnement à au moins un nœud de réseau ;
recevoir un signal de référence de liaison descendante pour le positionnement en provenance de l'au moins un nœud de réseau en réponse au signal de référence de liaison montante, dans lequel le signal de référence de liaison descendante est reçu au niveau de l'antenne primaire et d'au moins une antenne secondaire associée au nœud utilisateur et à proximité de celui-ci ;
obtenir, par le nœud utilisateur, une mesure de temps d'arrivée de l'au moins un signal de référence de liaison descendante pour le positionnement au niveau de l'antenne primaire ;
obtenir, par le nœud utilisateur, une mesure de temps d'arrivée de l'au moins un signal de référence de liaison descendante pour le positionnement au niveau de l'au moins une antenne secondaire ;
calculer, par le nœud utilisateur, une ou plusieurs mesures de différence de temps d'arrivée sur la base de la différence des mesures de temps d'arrivée du signal de référence de liaison descendante reçu en provenance du même nœud de réseau au niveau de l'antenne primaire et de l'au moins une antenne secondaire ;
calculer, par le nœud utilisateur, une ou plusieurs mesures de temps aller-retour mixte sur la base du temps de transmission du signal de référence de liaison montante à partir de l'antenne primaire et du temps de réception de l'au moins un signal de référence de liaison descendante au niveau de l'au moins une antenne secondaire ;
obtenir, par le nœud utilisateur, une distance entre l'antenne primaire et l'au moins une antenne secondaire ;
déterminer, par le nœud utilisateur, un rapport de mesure comprenant les une ou plusieurs mesures de temps aller-retour mixte, les une ou plusieurs mesures de différence de temps d'arrivée et la distance entre l'antenne primaire et l'au moins une antenne secondaire ; et
envoyer, par le nœud utilisateur, le rapport de mesure à une fonction de gestion de localisation pour le positionnement.

2. Appareil selon la revendication 1, dans lequel au moins l'une de l'antenne primaire ou de l'antenne secondaire est un panneau d'antenne ou un réseau d'antennes.

3. Appareil selon l'une quelconque des revendications 1 à 2, dans lequel l'au moins une antenne secondaire est une antenne d'un nœud utilisateur secondaire couplé en communication avec le nœud utilisateur ; et
la mesure de temps d'arrivée de l'au moins un signal de référence de liaison descendante pour le positionnement au niveau de l'antenne secondaire est obtenue à partir du nœud utilisateur secondaire.

4. Appareil selon la revendication 3, configuré pour :
transmettre, par le nœud utilisateur, un message de configuration à au moins un nœud utilisateur secondaire, dans lequel le message de configuration comprend une synchronisation d'horloge entre le nœud utilisateur et le nœud utilisateur secondaire et une demande de rapporter des informations de temps d'arrivée du signal de référence de liaison descendante pour le positionnement au nœud utilisateur.

5. Appareil selon la revendication 3 ou 4, dans lequel l'appareil est configuré pour :
transmettre, par le nœud utilisateur, le signal de référence de liaison descendante pour le positionnement reçu en provenance de l'au moins un nœud de réseau au nœud utilisateur secondaire.

6. Appareil selon l'une quelconque des revendications 3 à 5, dans lequel l'appareil est configuré pour :
transmettre, par le nœud utilisateur, des données d'assistance au positionnement pour mesurer le temps d'arrivée du signal de référence de liaison descendante pour le positionnement reçu en provenance de l'au moins un nœud de réseau au nœud utilisateur secondaire.

7. Appareil selon l'une quelconque des revendications précédentes, dans lequel l'appareil est en outre configuré pour :
obtenir au moins l'une d'une vitesse, d'une métrique de position ou d'une mesure d'angle d'arrivée associée à au moins l'un du nœud utilisateur ou du nœud utilisateur secondaire couplé au nœud utilisateur ; et
le rapport de mesure comprend au moins l'une de la vitesse, de la métrique de position ou de la mesure d'angle d'arrivée.

8. Appareil pour une fonction de gestion de localisation, configuré pour :
recevoir, par la fonction de gestion de localisation, en provenance d'un nœud utilisateur, un rapport de mesure comprenant au moins une mesure de temps aller-retour mixte, au moins une mesure de différence de temps et une distance entre une antenne primaire et au moins une antenne secondaire en provenance d'un nœud utilisateur, dans lequel la mesure aller-retour mixte est basée sur la différence entre un temps de transmission d'un signal de référence de liaison montante à partir de l'antenne primaire vers au moins un nœud de réseau et un temps de réception d'un signal de référence de liaison descendante en provenance de l'au moins un nœud de réseau au niveau de l'au moins une antenne secondaire et la différence de temps d'arrivée est basée sur la différence des mesures de temps d'arrivée du signal de référence de liaison descendante reçu en provenance du même nœud de réseau au niveau de l'antenne primaire et de l'au moins une antenne secondaire ;
recevoir, par la fonction de gestion de localisation, un rapport comprenant une mesure de différence de temps associée à la réception du signal de référence de liaison montante pour le positionnement et à la transmission du signal de référence de liaison descendante pour le positionnement en provenance de l'au moins un nœud de réseau ;
calculer des distances de l'antenne primaire et de l'au moins une antenne secondaire par rapport à l'au moins un nœud de réseau sur la base de la mesure de temps aller-retour mixte et des mesures de différence de temps reçues en provenance de l'au moins un nœud de réseau et du nœud utilisateur ;
calculer des emplacements de l'antenne primaire et de l'au moins une antenne secondaire par rapport à l'au moins un nœud de réseau sur la base des distances de l'antenne primaire et de l'au moins une antenne secondaire par rapport à l'au moins un nœud de réseau et de la distance entre l'antenne primaire et l'au moins une antenne secondaire ; et
déterminer une position et une orientation ou un cap du nœud utilisateur et des antennes associées sur la base des distances de l'antenne primaire et de l'au moins une antenne secondaire par rapport à l'au moins un nœud de réseau et des emplacements de l'antenne primaire et de l'au moins une antenne secondaire par rapport à l'au moins un nœud de réseau.

9. Appareil selon la revendication 8, dans lequel le rapport de mesure comprend en outre au moins l'une d'une vitesse, d'une mesure de métrique de position ou d'une mesure d'angle d'arrivée associée à au moins l'un du nœud utilisateur ou d'un nœud utilisateur secondaire couplé au nœud utilisateur ; et
la position et l'orientation ou le cap du nœud utilisateur et des antennes associées est déterminé sur la base d'au moins l'une de la vitesse, de la mesure de métrique de position ou de la mesure d'angle d'arrivée à l'aide d'un algorithme de suivi local.

10. Appareil selon la revendication 9, dans lequel l'algorithme de suivi local comprend l'une d'une analyse de séries temporelles, d'un filtrage de Kalman ou d'une prédiction basée sur l'apprentissage automatique.

11. Procédé, comprenant :
la transmission, à partir d'une antenne primaire d'un nœud utilisateur, d'un signal de référence de liaison montante pour le positionnement à au moins un nœud de réseau ;
la réception d'un signal de référence de liaison descendante pour le positionnement en provenance de l'au moins un nœud de réseau en réponse au signal de référence de liaison montante, dans lequel le signal de référence de liaison descendante est reçu au niveau de l'antenne primaire et d'au moins une antenne secondaire associée au nœud utilisateur et à proximité de celui-ci ;
l'obtention, par le nœud utilisateur, d'une mesure de temps d'arrivée de l'au moins un signal de référence de liaison descendante pour le positionnement au niveau de l'antenne primaire ;
l'obtention, par le nœud utilisateur, d'une mesure de temps d'arrivée de l'au moins un signal de référence de liaison descendante pour le positionnement au niveau de l'au moins une antenne secondaire ;
le calcul, par le nœud utilisateur, d'une ou plusieurs mesures de différence de temps d'arrivée sur la base de la différence des mesures de temps d'arrivée du signal de référence de liaison descendante reçu en provenance du même nœud de réseau au niveau de l'antenne primaire et de l'au moins une antenne secondaire ;
le calcul, par le nœud utilisateur, d'une ou plusieurs mesures de temps aller-retour mixte sur la base du temps de transmission du signal de référence de liaison montante à partir de l'antenne primaire et du temps de réception de l'au moins un signal de référence de liaison descendante au niveau de l'au moins une antenne secondaire ;
l'obtention, par le nœud utilisateur, d'une distance entre l'antenne primaire et l'au moins une antenne secondaire ;
la détermination, par le nœud utilisateur, d'un rapport de mesure comprenant les une ou plusieurs mesures aller-retour mixte, les une ou plusieurs mesures de différence de temps d'arrivée et la distance entre l'antenne primaire et l'au moins une antenne secondaire ; et
l'envoi, par le nœud utilisateur, du rapport de mesure à une fonction de gestion de localisation pour le positionnement.

12. Procédé, comprenant :
la réception, par une fonction de gestion de localisation, en provenance d'un nœud utilisateur, d'un rapport de mesure comprenant au moins une mesure de temps aller-retour mixte, au moins une mesure de différence de temps et une distance entre une antenne primaire et au moins une antenne secondaire en provenance d'un nœud utilisateur, dans lequel la mesure aller-retour mixte est basée sur la différence entre un temps de transmission d'un signal de référence de liaison montante vers au moins un nœud de réseau à partir de l'antenne primaire et un temps de réception d'un signal de référence de liaison descendante en provenance de l'au moins un nœud de réseau au niveau de l'au moins une antenne secondaire et la différence de temps d'arrivée est basée sur la différence des mesures de temps d'arrivée du signal de référence de liaison descendante reçu en provenance du même nœud de réseau au niveau de l'antenne primaire et de l'au moins une antenne secondaire ;
la réception, par la fonction de gestion de localisation, d'un rapport comprenant une mesure de différence de temps associée à la réception du signal de référence de liaison montante pour le positionnement et à la transmission du signal de référence de liaison descendante pour le positionnement en provenance de l'au moins un nœud de réseau ;
le calcul de distances de l'antenne primaire et de l'au moins une antenne secondaire par rapport à l'au moins un nœud de réseau sur la base de la mesure de temps aller-retour mixte et des mesures de différence de temps reçues en provenance de l'au moins un nœud de réseau et du nœud utilisateur ;
le calcul d'emplacements de l'antenne primaire et de l'au moins une antenne secondaire par rapport à l'au moins un nœud de réseau sur la base des distances de l'antenne primaire et de l'au moins une antenne secondaire par rapport à l'au moins un nœud de réseau et de la distance entre l'antenne primaire et l'au moins une antenne secondaire ; et
la détermination d'une position et d'une orientation ou d'un cap du nœud utilisateur et des antennes associées sur la base des distances de l'antenne primaire et de l'au moins une antenne secondaire par rapport à l'au moins un nœud de réseau et des emplacements de l'antenne primaire et de l'au moins une antenne secondaire par rapport à l'au moins un nœud de réseau.

13. Programme d'ordinateur comprenant des instructions qui, lorsque le programme est exécuté par un ordinateur compris dans un appareil pour un nœud utilisateur, amènent l'ordinateur à :
transmettre, à partir d'une antenne primaire du nœud utilisateur, un signal de référence de liaison montante pour le positionnement à au moins un nœud de réseau ;
recevoir un signal de référence de liaison descendante pour le positionnement en provenance de l'au moins un nœud de réseau en réponse au signal de référence de liaison montante, dans lequel le signal de référence de liaison descendante est reçu au niveau de l'antenne primaire et d'au moins une antenne secondaire associée au nœud utilisateur et à proximité de celui-ci ;
obtenir, par le nœud utilisateur, une mesure de temps d'arrivée de l'au moins un signal de référence de liaison descendante pour le positionnement au niveau de l'antenne primaire ;
obtenir, par le nœud utilisateur, une mesure de temps d'arrivée de l'au moins un signal de référence de liaison descendante pour le positionnement au niveau de l'au moins une antenne secondaire ;
calculer, par le nœud utilisateur, une ou plusieurs mesures de différence de temps d'arrivée sur la base de la différence des mesures de temps d'arrivée du signal de référence de liaison descendante reçu en provenance du même nœud de réseau au niveau de l'antenne primaire et de l'au moins une antenne secondaire ;
calculer, par le nœud utilisateur, une ou plusieurs mesures de temps aller-retour mixte sur la base du temps de transmission du signal de référence de liaison montante à partir de l'antenne primaire et du temps de réception de l'au moins un signal de référence de liaison descendante au niveau de l'au moins une antenne secondaire ;
obtenir, par le nœud utilisateur, une distance entre l'antenne primaire et l'au moins une antenne secondaire ; et
déterminer, par le nœud utilisateur, un rapport de mesure comprenant les une ou plusieurs mesures aller-retour mixte, les une ou plusieurs mesures de différence de temps d'arrivée et la distance entre l'antenne primaire et l'au moins une antenne secondaire ; et
envoyer, par le nœud utilisateur, le rapport de mesure à une fonction de gestion de localisation pour le positionnement.

14. Programme d'ordinateur comprenant des instructions qui, lorsque le programme est exécuté par un ordinateur compris dans un appareil pour une fonction de gestion de localisation, amènent l'ordinateur à :
recevoir, par la fonction de gestion de localisation, en provenance d'un nœud utilisateur, un rapport de mesure comprenant au moins une mesure de temps aller-retour mixte, au moins une mesure de différence de temps et une distance entre une antenne primaire et au moins une antenne secondaire en provenance d'un nœud utilisateur, dans lequel la mesure aller-retour mixte est basée sur la différence entre un temps de transmission d'un signal de référence de liaison montante vers au moins un nœud de réseau à partir de l'antenne primaire et un temps de réception d'un signal de référence de liaison descendante en provenance de l'au moins un nœud de réseau au niveau de l'au moins une antenne secondaire et la différence de temps d'arrivée est basée sur la différence des mesures de temps d'arrivée du signal de référence de liaison descendante reçu en provenance du même nœud de réseau au niveau de l'antenne primaire et de l'au moins une antenne secondaire ;
recevoir, par la fonction de gestion de localisation, un rapport comprenant une mesure de différence de temps associée à la réception de la liaison montante et à la transmission du signal de référence de liaison descendante pour le positionnement en provenance de l'au moins un nœud de réseau ;
calculer des distances de l'antenne primaire et de l'au moins une antenne secondaire par rapport à l'au moins un nœud de réseau sur la base de la mesure de temps aller-retour mixte et des mesures de différence de temps reçues en provenance de l'au moins un nœud de réseau et du nœud utilisateur ;
calculer des emplacements de l'antenne primaire et de l'au moins une antenne secondaire par rapport à l'au moins un nœud de réseau sur la base des distances de l'antenne primaire et de l'au moins une antenne secondaire par rapport à l'au moins un nœud de réseau et de la distance entre l'antenne primaire et l'au moins une antenne secondaire ; et
déterminer une position et une orientation ou un cap du nœud utilisateur et des antennes associées sur la base des distances de l'antenne primaire et de l'au moins une antenne secondaire par rapport à l'au moins un nœud de réseau et des emplacements de l'antenne primaire et de l'au moins une antenne secondaire par rapport à l'au moins un nœud de réseau.
